# EUROPÄISCHE PATENTSCHRIFT

(11) **EP 0 698 757 B1**
(45) Veröffentlichungstag und Bekanntmachung des Hinweises auf die Patenterteilung: **13.01.1999**
(21) Anmeldenummer: 95112991.5
(22) Anmeldetag: 18.08.1995
(51) Int. Cl.: F16K 1/42, B23P 15/00, F16K 25/00

(54) **Verfahren zur Herstellung von Serienventilen**
Method of batch manufacturing of valves
Procédé de fabrication en série de robinets

(30) Priorität: 23.08.1994 DE 4429804
(43) Veröffentlichungstag der Anmeldung: 28.02.1996
(73) Patentinhaber: JOHNSON SERVICE COMPANY, Milwaukee, Wisconsin 53201 (US)
(72) Erfinder: Schmitz, Manfred, 45356 Essen (DE)
(74) Vertreter: Albrecht, Rainer Harald, Dr.-Ing.

(56) Entgegenhaltungen:
- DE-A- 1 458 426
- DE-A- 1 775 879
- DE-U- 7 244 300
- GB-A- 1 365 452
- US-A- 4 491 300

## Beschreibung

Die Erfindung betrifft ein Verfahren zur Herstellung von in Heizungs-, Lüftungs- und Klimaanlagen eingesetzten Serienventilen, die ein Ventilgehäuse, mindestens einen in einer Drosselkörperöffnung des Gehäuses angeordneten Ventilsitz aus rostfreiem Stahl sowie eine Stellstange mit mindestens einem Drosselkörper aufweisen, wobei die Stellstange durch einen Deckel, der eine mit dem Ventilsitz fluchtende Deckelöffnung des Gehäuses verschließt, nach außen geführt ist. Die Serienventile können als Durchgangsventile mit einem Ein- und Ausgang oder als Mehrwegeventile ausgeführt sein. Sie werden in Heizungs-, Lüftungs- und Klimaanlagen vornehmlich als Wasser- und Dampfventile in genormten Nennweiten und Nenndruckstufen bis maximal 40 bar eingesetzt. Ein Einsatz als Gasventil ist jedoch nicht ausgeschlossen.

Serienventile für Heizungs-, Lüftungs- und Klimaanlagen werden in größeren Stückzahlen gefertigt. Ziel ist eine einfache, kostengünstige Fertigung. Im Rahmen der bekannten Maßnahmen ist der Ventilsitz an einem Gewindering angeformt, der in die Drosselkörperöffnung des zuvor fertigbearbeiteten Gehäuses eingeschraubt wird. Die bekannte Ausführung hat mehrere Nachteile. Eine Deckelöffnung, deren Durchmesser wesentlich größer ist als der Durchmesser des Drosselkörpers ist erforderlich, damit der Gewindering in das Gehäuse eingebracht werden kann. Der Deckel, der zugeordnete Flansch am Gehäuse sowie die Befestigungsschrauben müssen unverhältnismäßig groß dimensioniert werden, da die von dem Betriebsdruck ausgeübte Kraft der Deckelfläche proportional ist. Große Abmessungen des Gehäuses und ein erhöhter Materialbedarf sind die Folge. Das Anbringen des Gewindes für den Einbau des Sitzringes ist ferner fertigungstechnisch aufwendig, und die Abdichtung des Außengewindes erfordert zusätzliche, den Fertigungs- und Montageaufwand erhöhende Maßnahmen. Auch ist insbesondere bei hohen Medientemperaturen eine ordnungsgemäße Abdichtung nicht immer sichergestellt. Fluchtungsfehler zwischen Sitzring und Gehäuse sind infolge einzuräumender Toleranzen unvermeidbar.

Ein aus DE-U 72 44 300 bekanntes Ventil für korrosive Medien weist ein Ventilgehäuse aus Gußeisen sowie einen Ventilsitz, der durch Auftragsverfahren auf das Ventilgehäuse aufgebracht oder als vorgefertigter Ring angeschweißt wird, auf. Das Herstellungsverfahren ist aufwendig. Der Gußrohling muß an der Stelle, an der der Ventilsitz ausgebildet werden soll, roh abgedreht und anschließend mit einem entfettenden Lösungsmittel sorgfältig gereinigt und abgeblasen werden. Bevor der Sitzwerkstoff aufgetragen oder ein Sitzring eingeschweißt werden kann, muß der gesamte Gußrohling vorgewärmt werden. Auf das mechanisch bearbeitete Gußstück wird nach einer Vorwärmung des Gußrohlings durch ein Aufspritzverfahren eine Wulst aus einer korrosionsfesten Metallegierung aufgebracht, wobei das Material über eine größere Breite verteilt wird als sie der plangedrehten Grundfläche entspricht. Eine spanende, formgebende Bearbeitung nicht nur des Wulstes sondern auch der umgebenden Oberflächen des Gußstückes ist anschließend erforderlich. Eine Kunststoffbeschichtung und eine abschließende spanende Bearbeitung auf das Endmaß des Sitzwerkstoffes oder eine abschließende Bearbeitung des eingeschweißten Sitzringes schließen sich als letzte Verfahrensschritte an. Neben dem hohen Fertigungsaufwand hat das bekannte Verfahren auch den Nachteil, daß eine exakte Zuordnung der Sitzflächen des Ventilsitzes und anderer Paßflächen des Gehäuses nicht sichergestellt ist.

Ferner sind gesenkgeschmiedete Gehäuse mit eingeschweißten Sitzringen bekannt (DE-AS 17 75 879). Zur Herstellung von Serienventilen, die in großen Stückzahlen in Heizungs-, Lüftungs- und Klimaanlagen eingesetzt werden, eignen sich gesenkgeschmiedete Gehäuse aufgrund ihrer verhältnismäßig hohen Fertigungskosten nur eingeschränkt.

Der Erfindung liegt die Aufgabe zugrunde, ein Verfahren zum Herstellen von Serienventilen der eingangs beschriebenen Art anzugeben, welches eine einfache Ventilfertigung in wenigen Bearbeitungsstufen bei gleichzeitiger Verbesserung der Dichtigkeit der Ventile ermöglicht.

Die Aufgabe wird erfindungsgemäß gelöst durch ein Verfahren, bei dem
zur Fertigung des Ventilgehäuses ein Rohling aus Sphäroguß verwendet wird, der eine Drosselkörperöffnung mit einer stirnseitig offenen Ringnut aufweist,
eine Schweißwulst aus einem hochlegierten, austenitischem Auftragswerkstoff ohne vorausgehende spanende Bearbeitung der Gußoberfläche im Wege des Auftragsschweißens unter Schutzgas mit Impulschichtbogen in die Ringnut eingebracht wird,
der Gussrohling in einer Aufspannvorrichtung fixiert und in dieser Aufspannung ohne Positionswechsel des Gussrohlings der Ventilsitz durch spanende Bearbeitung der Schweißwulst hergestellt und ausserdem die spanende Fertigbearbeitung des Gussrohlings durchgeführt wird und schließlich
die Stellstange mit Drosselkörper sowie der Deckel montiert werden.

Sphäroguß bezeichnet ein Gußeisen mit Kugelgraphit. Überraschenderweise ist weder eine Vorwärmung des Gußrohlings erforderlich, noch muß die Gußhaut des Gußrohlings entfernt werden, bevor der austenitische Auftragswerkstoff durch Auftragschweißen aufgebracht wird. Eine aufwendige Vorbehandlung des Gußrohlings entfällt bei dem erfindungsgemäßen Verfahren, bei dem ein Gußrohling aus Sphäroguß eingesetzt wird. Die Dicke der Schweißwulst wird so gewählt, daß Fertigungstoleranzen bei der Herstellung des Gußrohlings ausgeglichen werden. Die Schweißwulst hat eine Dicke von mehreren Millimetern und bewegt sich im Bereich zwischen 2 und 8 mm für Ventile mit den Nennweiten DN 15 bis DN 150. Als Auftragswerkstoff eignet sich besonders Capilla 51 MSG 8-GZ (1.4370) als Standardausführung. Ein damit hergestellter Ventilsitz in Form einer Sitzkante erweist sich als riß- und porenfrei und erfüllt die Anforderungen für eine gute Dichtung. Für das erfindungsgemäße Verfahren ist ferner wesentlich, daß die gesamte spanende Bearbeitung des Gußkörpers im Anschluß an den Schweißvorgang in einer einzigen Aufspannung erfolt. Die spanende Bearbeitung in einer Aufspannung bedeutet, daß der zu bearbeitende Gußrohling an außenseitigen Paßflächen in einer Aufspannvorrichtung fixiert wird und daß in einem Zuge ohne Positionswechsel des Gußrohlings sämtliche Sitz- und Paßflächen durch spanende Bearbeitung hergestellt werden. Eine exakte Zuordnung der Sitzflächen und der übrigen Paßflächen des Ventilgehäuses ist dadurch gewährleistet. Das Auftragsschweißen wird vorzugsweise unter Schutzgas mit Impulslichtbogen ausgeführt, wobei sich als Schutzgas ein Gasgemisch mit Argon als Hauptbestandteil und Zusätzen von CO₂ und Sauerstoff bewährt hat. Nach der Bearbeitung der Sitzkante können dünne Hartmetallschichten aufgetragen werden. Eine Vergütung der bereits fertig bearbeiteten Sitzkante, insbesondere eine Laserhärtung, ist ebenfalls möglich.

Mit dem erfindungsgemäßen Verfahren können sowohl Durchgangsventile als auch Mehrwegeventile hergestellt werden. Im Hinblick auf die Herstellung von Mehrwegeventilen lehrt die Erfindung in weiterer Ausgestaltung, daß ein Gehäusegußrohling aus Sphäroguß verwendet wird, der zwei identisch ausgeführte und in einer Flucht liegende Deckelöffnungen aufweist. Nach der Bearbeitung des Gußrohlings wird an eine der beiden Deckelöffnungen ein Abzweigflansch aus Gußeisen mit ebenfalls einer Drosselkörperöffnung und eine durch Auftragsschweißen hergestellte Schweißwulst aus einem hochlegierten, austenitischem Auftragswerkstoff angeschlossen. Die komplette Bearbeitung des Abzweigflansches kann in der gleichen Bearbeitungsstation durchgeführt werden, in der auch der Gehäuse-Gußrohling bearbeitet wird.

Im folgenden wird die Erfindung anhand einer lediglich ein Ausführungsbeispiel darstellenden Zeichnung erläutert. Es zeigen in schematischer Darstellung
- Fig. 1: den Längsschnitt durch ein nach dem erfindungsgemäßen Verfahren hergestelltes Durchgangsventil,
- Fig. 2 und 3: Längsschnitte durch ein nach dem erfindungsgemäßen Verfahren hergestelltes Mehrwegeventil in verschiedenen Ausführungen,
- Fig. 4: einen Ausschnitt aus einem nach dem erfindungsgemäßen Verfahren hergestellten Ventilsitz in einer vielfachen Vergrößerung,

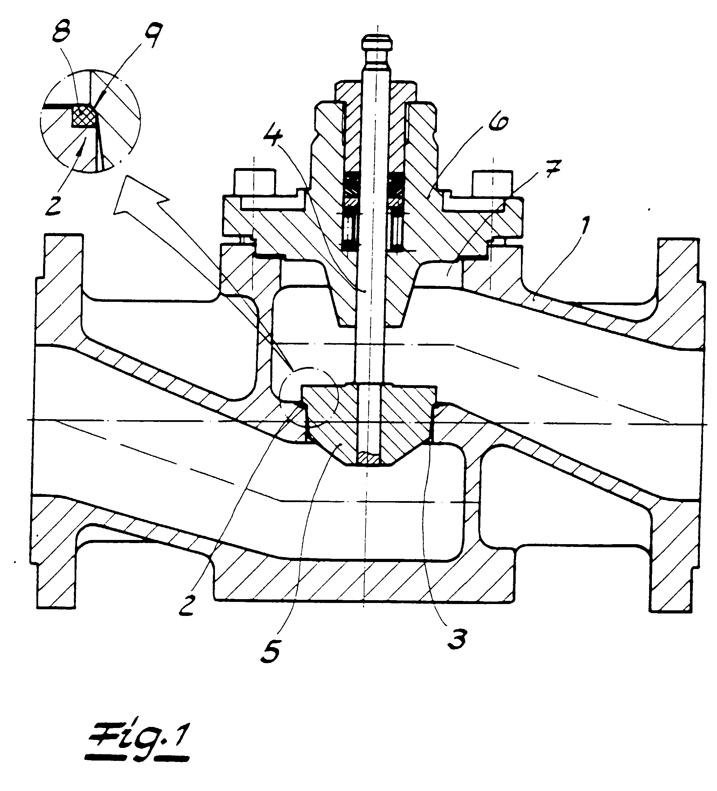

Die Fig. 1 bis 3 zeigen Serienventile für Anwendungen in Heizungs-, Lüftungs- und Klimaanlagen. Sie sind für einen Nenndruckbereich bis maximal 40 bar ausgelegt und werden vornehmlich als Wasser- und Dampfventile eingesetzt. Zum grundsätzlichen Aufbau der in den Figuren dargestellten Ventile gehören ein Ventilgehäuse 1 aus Sphäroguß, mindestens ein Ventilsitz 2 aus rostfreiem Stahl, der in einer Drosselkörperöffnung 3 des Ventilgehäuses 1 angeordnet ist, eine Stellstange 4 mit mindestens einem Drosselkörper 5 sowie ein Deckel 6, der eine mit dem Ventilsitz 2 fluchtende Deckelöffnung 7 des Ventilgehäuses 1 verschließt. Die Stellstange 4 ist durch den Deckel 6 nach außen geführt und im Deckel 6 abgedichtet.

Das Ventilgehäuse 1 wird aus einem Gußrohling aus Sphäroguß gefertigt. Sphäroguß bezeichnet ein Gußeisen mit Kugelgraphit (DIN 1693). Bevorzugt ist die Qualität GGG 40 oder GGG 40.3.

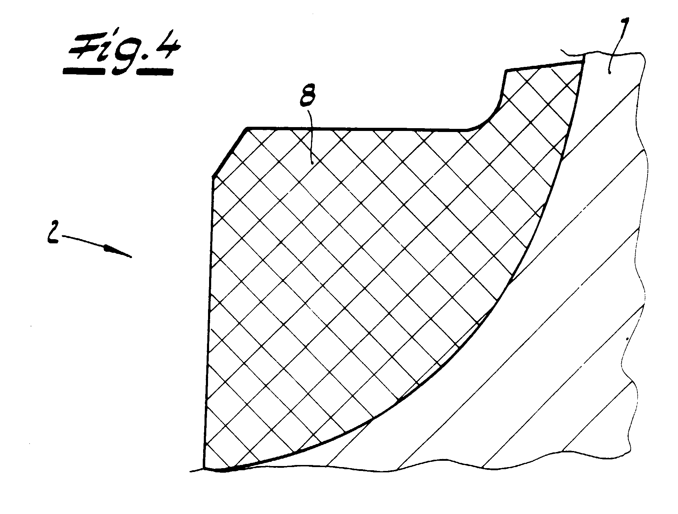

Bei den in den Fig. 1 bis 3 dargestellten Ausführungen des Ventils besteht der Ventilsitz 2 aus einer durch Auftragsschweißung hergestellten Sitzkante 8. Fig. 4 zeigt einen stark vergrößerten Ausschnitt dieser Sitzkante 8. Der Ventilsitz 2 bzw. die Sitzkante 8 wird dadurch hergestellt, daß zunächst eine Schweißwulst aus rostfreiem Werkstoff im Wege des Auftragsschweißens in eine stirnseitig offene Ringnut 9 der Drosselkörperöffnung 3 eingebracht wird. Die Ringnut 9 ist in den Gußrohling gießtechnisch eingeformt. Der Gußrohling wird vor der Auftragsschweißung weder erwärmt, noch erfolgt vor der Auftragsschweißung eine spanende Bearbeitung an dem Gußrohling. Auch eine Gußhaut wird nicht entfernt. Ein hochlegierter, austenitischer Auftragswerkstoff wird verwendet. Die Schweißarbeiten werden unter Schutzgas mit Impluslichtbogen ausgeführt, wobei als Schutzgas ein Gasgemisch mit Argon als Hauptbestandteil und Zusätzen von CO₂ und Sauerstoff eingesetzt wird. Nachdem die Schweißwulst hergestellt ist wird der Gußrohling an gehäuseaußenseitigen Paßflächen in einer Aufspannvorrichtung aufgespannt und in dieser Aufspannung komplett fertigbearbeitet. Die Fertigbearbeitung umfaßt eine spanende Formung der Schweißwulst sowie die spanende Bearbeitung sämtlicher Sitz- und Paßflächen. Schließlich kann das Ventilgehäuse 1 lackiert und können die Stellstange 4 mit Drosselkörper 5 sowie der Deckel 6 montiert werden.

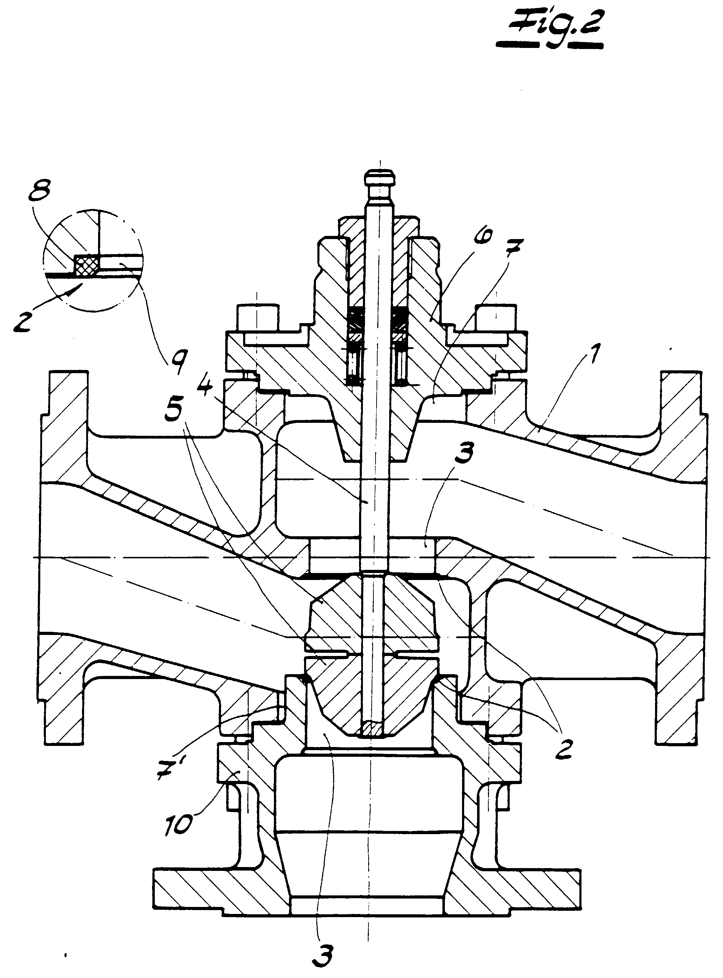

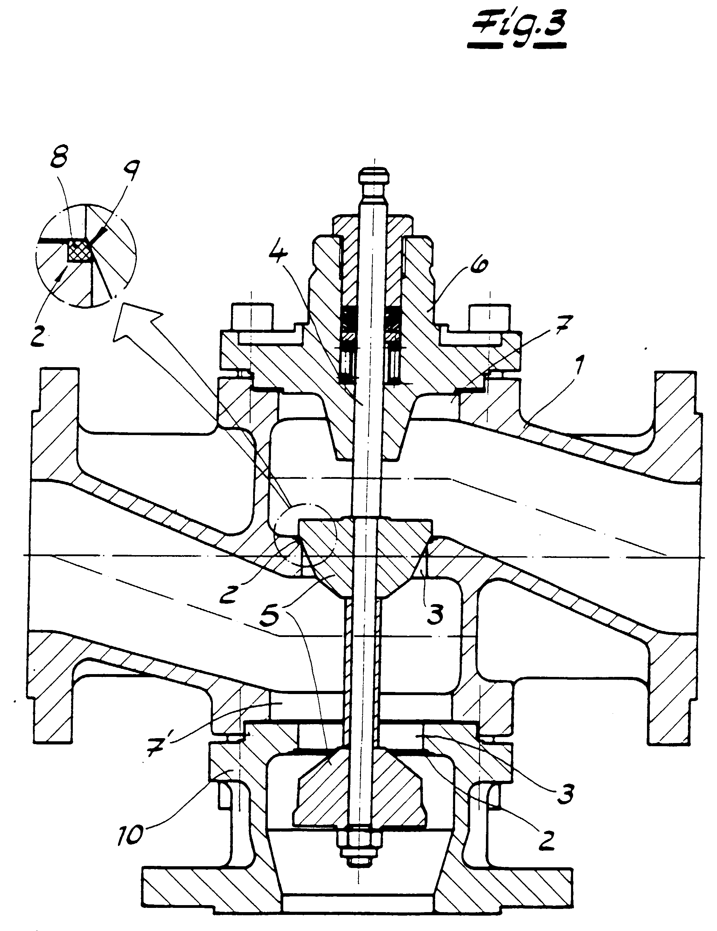

Die Fig. 2 und 3 betreffen Mehrwegeventile, die nach dem erfindungsgemäßen Verfahren hergestellt wurden. Das aus Sphäroguß bestehende Ventilgehäuse 1 weist zwei identisch ausgeführte und in einer Flucht liegende Deckelöffnungen 7, 7' auf. Eine Deckelöffnung 7 ist durch einen Deckel 6, in dem die Stellstange 4 geführt ist, verschlossen. An die andere Deckelöffnung 7' ist ein Abzweigflansch 10 aus Gußeisen angeschlossen, der ebenfalls eine Drosselkörperöffnung 3 und einen eingeschweißten Ventilsitz 2 aus rostfreiem Stahl aufweist. Die Herstellung des Ventilsitzes 2 erfolgt in der zuvor beschriebenen Weise durch Auftragsschweißung. Anschließend werden in einer einzigen Aufspannung der Ventilsitz 2 durch spanende Formung der Schweißwulst hergestellt sowie der Gußrohling fertigbearbeitet.

### Beispiel:

Durch Auftragsschweißung wurde ein Ventilsitz, wie in Fig. 4 dargestellt, in einer stirnseitig offenen Ringnut einer Durchgangsbohrung des Gußgehäuses erzeugt. Das Gußgehäuse bestand aus Sphäroguß GGG 40.3. Folgende Schweißparameter wurden eingehalten:

| | |
|---|---|
| Schweißwerkstoff | Capilla 51 MSG 8-GZ (1.4370) |
| Schutzgas | 90 % Ar, 5 % O₂, 5 % CO₂ |
| Stromstärke | 200-205 A |
| Spannung | 24-26 V |
| Drahtvorschub | 7,2-7,5 m/min |
| Schweißgeschwindigkeit | 70 cm/min |
| Drahtgewicht pro Raupe | 25g |

Die Schweißwulst war riß- und porenfrei und gut spanend bearbeitbar. Es entstand eine konturgenaue Sitzkante mit guter Dichtwirkung.

Zu Prüfzwecken wurde das nach dem erfindungsgemäßen Verfahren hergestellte Ventil auf 300° C erwärmt und in Wasser abgeschreckt. Durch übliche Prüfverfahren einschließlich Röntgenuntersuchungen wurde festgestellt, daß an der Sitzkante keine Risse oder Mikrorisse auftraten. Das Ventil behielt seine ausgezeichnete Dichtwirkung in vollem Umfange bei.

Messungen an einem erfindungsgemäß hergestellten Ventil der Nennweite 65 mit eingeschweißter Sitzkante ergaben gegenüber einem vergleichbaren Ventil der Nennweite 65 mit eingeschraubtem Sitzring eine über 100 %ige Reduzierung der Leckagen.

## Patentansprüche

1. Verfahren zur Herstellung von in Heizungs-, Lüftungs- und Klimaanlagen eingesetzten Serienventilen, die ein Ventilgehäuse (1), mindestens einen in einer Drosselkörperöffnung (3) des Gehäuses (1) angeordneten Ventilsitz (2) aus rostfreiem Stahl sowie eine Stellstange (4) mit mindestens einem Drosselkörper (5) aufweisen, wobei die Stellstange (4) durch einen Deckel (6), der eine mit dem Ventilsitz (2) fluchtende Deckelöffnung (7) des Ventilgehäuses (1) verschließt, nach außen geführt ist, bei welchem Verfahren
zur Fertigung des Ventilgehäuses (1) ein Gußrohling aus Sphäroguß verwendet wird, der eine Drosselkörperöffnung (3) mit einer stirnseitig offenen Ringnut (9) aufweist,
eine Schweißwulst (8) aus einem hochlegierten, austenitischem Auftragswerkstoff ohne vorausgehende spanende Bearbeitung der Gußoberfläche im Wege des Auftragsschweißens unter Schutzgas mit Impulslichtbogen in die Ringnut (9) eingebracht wird,
der Gußrohling in einer Aufspannvorrichtung fixiert und in dieser Aufspannung ohne Positionswechsel des Gußrohlings der Ventilsitz (2) durch spanende Bearbeitung der Schweißwulst (8) hergestellt und außerdem die spanende Fertigbearbeitung des Gußrohlings durchgeführt wird und schließlich die Stellstange (4) mit Drosselkörper (5) sowie der Deckel (6) montiert werden.

2. Verfahren nach Anspruch 1, wobei ein Gußrohling verwendet wird, der nach der Bearbeitung zwei identisch ausgeführte und in einer Flucht liegende Deckelöffnungen (7) aufweist.

3. Verfahren nach Anspruch 1 oder 2, wobei die Sitzfläche des Ventilsitzes (2) im Anschluß an die Fertigbearbeitung lasergehärtet wird.

4. Verfahren nach Anspruch 1 oder 2, wobei als Schutzgas für die Auftragsschweißung ein Gasgemisch mit Argon als Hauptbestandteil und Zusätzen von CO₂ und Sauerstoff eingesetzt wird.

## Claims

1. A method of producing mass-produced valves used in heating, ventilating and air-conditioning installations, which comprise a valve housing (1), at least one valve seat (2) made of stainless steel, which is disposed in a throttle body opening (3) of the housing (1), and which comprise a control rod (4) having at least one throttle body (5), wherein the control rod (4) is led outwards through a cover (6) which closes a cover opening (7) of the valve housing (1), which cover opening is aligned with the valve seat (2), in which method
a casting blank made of spheroidal graphite iron is used for the production of the valve housing (1), which casting blank has a throttle body opening (3) with an annular groove (9) which is open at the end face thereof,
a weld bead (8) made of a high-alloy, austenitic deposition material is introduced into the annular groove (9) by a deposition welding route using a pulsed arc under a protective gas, without prior metal-cutting machining of the casting surface,
the casting blank is fixed in a chucking device and in this chucking step, without changing the position of the casting blank, the valve seat (2) is produced by metal-cutting machining of the weld bead (8) and metal-cutting finish-machining of the casting blank is carried out in addition, and finally
the control rod (4) with the throttle body (5) is installed, as well as the cover (6).

2. A method according to claim 1, wherein a casting blank is used which after machining has two identically produced cover openings (7) which are in alignment.

3. A method according to claims 1 or 2, wherein the seat face of the valve seat (2) is laser-hardened following finish-machining.

4. A method according to claims 1 or 2, wherein a gas mixture comprising argon as the main constituent with additions of CO₂ and oxygen is used as the protective gas for deposition welding.

## Revendications

1. Procédé de fabrication de vannes en série montées dans des installations de chauffage, de ventilation et de climatisation, qui comportent un boîtier de vanne (1), au moins un siège de vanne (2) disposé dans une ouverture de corps d'étranglement (3) du boîtier (1) en acier inoxydable, ainsi qu'une tige de réglage (4) avec au moins. un corps d'étranglement (5), la tige de réglage (4) étant guidée vers l'extérieur à travers un couvercle (6), qui ferme une ouverture de couvercle (7) du boîtier de vanne (1), alignée avec le siège de vanne (2), dans lequel procédé,
pour la fabrication du boîtier de vanne (1) on utilise une ébauche en fonte sphérolithique, qui présente une ouverture de corps d'étranglement (3) avec une rainure annulaire (9) ouverte frontalement,
on introduit un bourrelet de soudage (8) en un matériau d'apport austénitique, fortement allié, dans la rainure annulaire (9), sans usinage préalable par enlèvement de copeaux de la surface en fonte, au cours du soudage à superposition sous protection de gaz avec arc pulsé,
on fixe l'ébauche en fonte dans un dispositif de serrage et dans ce serrage, sans changement de position de l'ébauche en fonte, on réalise le siège de vanne (2) par usinage du bourrelet de soudage (8) par enlèvement de copeaux et on exécute en outre le travail de finition par enlèvement de copeaux de l'ébauche en fonte et enfin,
on monte la tige de réglage (4) avec corps d'étranglement (5) ainsi que le couvercle (6).

2. Procédé selon la revendication 1, dans lequel on utilise une ébauche en fonte, qui, après usinage, présente deux ouvertures de couvercle (7) réalisées à l'identique et alignées.

3. Procédé selon la revendication 1 ou 2, dans lequel la surface de siège du siège de vanne (2) est durcie au laser à la suite de l'usinage de finition.

4. Procédé selon la revendication 1 ou 2, dans lequel on utilise comme gaz de protection pour le soudage à superposition, un mélange de gaz avec de l'argon comme constituant principal et des additifs de CO₂ et d'oxygène.
